# EUROPÄISCHE PATENTSCHRIFT

(11) **EP 3 353 451 B1**
(45) Veröffentlichungstag und Bekanntmachung des Hinweises auf die Patenterteilung: **08.01.2020**
(21) Anmeldenummer: 16730691.9
(22) Anmeldetag: 21.06.2016
(51) Int. Cl.: F16H 57/04, F16L 47/04

(54) **GETRIEBE MIT EINER ROHRLEITUNG**
TRANSMISSION HAVING A PIPELINE
TRANSMISSION POURVUE D'UN CONDUIT TUBULAIRE

(30) Priorität: 16.07.2015 DE 102015009071
(43) Veröffentlichungstag der Anmeldung: 01.08.2018
(73) Patentinhaber: SEW-EURODRIVE GmbH & Co. KG, 76646 Bruchsal (DE)
(72) Erfinder: LUFT, Christian, 76698 Ubstadt (DE); SCHWAN, Tobias, 69168 Wiesloch (DE); ELLER, Peter, 76676 Graben-Neudorf (DE)
(86) Internationale Anmeldenummer: PCT/EP2016/001052
(87) Internationale Veröffentlichungsnummer: WO 2017/008882

(56) Entgegenhaltungen:
- EP-A1- 2 479 252
- DE-A1-102006 020 608
- DE-U1-202007 018 371
- JP-A- 2010 249 156
- US-A- 2 687 784

## Beschreibung

Die Erfindung betrifft ein Getriebe mit einer Rohrleitung.

Es ist allgemein bekannt, dass ein Getriebe mit einer Rohrleitung zur Kühlung des Getriebeinnenraums ausführbar ist.

**Aus der** US 2 687 784 A **ist als nächstliegender Stand der Technik ein Getriebe mit Rohrleitung bekannt.**

**Aus der De** 10 2006 020 608 A1 **ist ein Verfahren zur Fixierung eines Abgasrohrs an einem Motorblock bekannt.**

**Aus der** JP 2010 249 156 A **ist ein Getriebe mit Kühlvorrichtung bekannt.**

**Aus der** DE 20 2007 018 371 U1 **ist ein Wärmetauschmodul für ein Getriebe bekannt.**

**Aus der** EP 2 479 252 A1 **ist eine Rohrhalterung zum Haltern eines Rohrabschnitts bekannt.**

Der Erfindung liegt daher die Aufgabe zugrunde, ein Getriebe mit einer Rohrleitung weiterzubilden, wobei eine erhöhte Sicherheit und somit Standzeit erreichbar sein soll.

Erfindungsgemäß wird die Aufgabe bei dem Getriebe nach den in Anspruch 1 angegebenen Merkmalen gelöst.

Wichtige Merkmale der Erfindung bei dem Getriebe mit einer Rohrleitung sind, dass im Innenraum des Getriebes ein Halteblech schraubverbunden ist, das eine oder mehr Ausnehmungen aufweist, in welchen jeweils ein Klemmring aufnehmbar ist, wobei die Rohrleitung in einem mit einem Gehäuseteil des Getriebes schraubverbundenen Schraubteil gehalten ist und durch einen in der Ausnehmung oder in einer der Ausnehmungen angeordneten Klemmring hindurchgeführt ist und/oder abgestützt ist.

Von Vorteil ist dabei, dass die Rohrleitung geschützt ist vor dem direkten Kontakt mit dem metallischen Halteblech. Der Klemmring ist aus Kunststoff oder einem anderen weicheren Material herstellbar. Somit ist ein durch mechanische Schwingungen oder Temperaturhübe bewirktes Aufscheuern verhinderbar.

Bei einer vorteilhaften Ausgestaltung ist der Klemmring aus einem elastischeren Material ausgeführt als das Halteblech. Von Vorteil ist dabei, dass ein Aufscheuern verhinderbar ist.

**Erfindungsgemäß** ist der Klemmring aus einem Kunststoff, insbesondere ein Polyamid, ausgeführt. Von Vorteil ist dabei, dass eine kostengünstige Herstellung ausführbar ist und eine hohe Verschleißfestigkeit erreichbar ist.

Bei einer vorteilhaften Ausgestaltung ist in der Rohrleitung eine Flüssigkeit, insbesondere eine Kühlflüssigkeit oder Heizflüssigkeit, angeordnet,
insbesondere wobei also die Flüssigkeit eine höhere oder niedrigere Temperatur als das die Rohrleitung umgebende Schmieröl des Getriebes aufweist. Von Vorteil ist dabei, dass ein Kühlen oder Erwärmen des Getriebes ausführbar ist.

Bei einer vorteilhaften Ausgestaltung ist die Rohrleitung auf den Klemmring aufgelegt. Von Vorteil ist dabei, dass die Rohrleitung nur leicht aufgelegt ist und somit möglichst geringen Abstützkräften ausgesetzt ist.

Bei einer vorteilhaften Ausgestaltung ist die Rohrleitung spielbehaftet im Klemmring angeordnet und/oder durchgeführt. Von Vorteil ist dabei, dass auch bei thermisch bedingten Ausdehnungen genügend Freiraum für die Rohrleitung vorhanden ist.

Bei einer vorteilhaften Ausgestaltung weist das Halteblech eine oder mehrere Laschen, insbesondere im Wesentlichen rechtwinklig vom Grundkörper des Halteblechs abgebogene, Laschen auf. Von Vorteil ist dabei, dass ein stabiles Halten und Abstützen der Rohrleitung ausführbar ist, wobei das Halteblech als Stanz-Biegeteil in einfacher Weise herstellbar ist.

Bei einer vorteilhaften Ausgestaltung weist die jeweilige Lasche jeweils eine Ausnehmung auf,
durch die jeweils ein Schraubelement hindurchführbar ist und mit welchem das Halteblech an die Innenseite eines Gehäuseteils des Getriebes angeschraubt ist,
insbesondere wobei das Schraubelement eine Schraube ist, deren Schraubenkopf die Lasche des Halteblechs gegen die Innenseite des Gehäuseteils drückt und deren Gewindebereich in eine Gewindebohrung im Gehäuseteil eigeschraubt ist. Von Vorteil ist dabei, dass eine einfach herstellbare Schraubverbindung einsetzbar ist.

Bei einer vorteilhaften Ausgestaltung ist der Klemmring als Rotationskörper ausgeführt mit Ausnahme eines Umfangsstellenbereiches, insbesondere eines zusammenhängenden Umfangswinkelbereichs. Von Vorteil ist dabei, dass der Klemmring als geschlitzter Ring ausführbar ist. Somit ist nur an einer Umfangsstelle ein Schlitz ausgeführt. Der Schlitz ist durchgehend in radialer Richtung und in axialer Richtung, ist aber auf einen Umfangswinkelbereich beschränkt, der weniger als 20°, insbesondere weniger als 10°, ausgedehnt ist.

**Erfindungsgemäß** weist der Klemmring eine nach radial innen hervorragende Dichtlippe auf. Von Vorteil ist dabei, dass eine weiter nach radial innen verschobene Abstützung der Rohrleitung ermöglicht ist. Die Rohrleitung ist also auf kleinerem Radialabstand anordenbar. Dabei ist der Radialabstand der Abstand zur Ringachse des Klemmrings. Die Dichtlippe ist in axialer Richtung weniger ausgedehnt als der Klemmring und somit bei elastischer Ausführung umwölbbar, so dass die Rohrleitung sehr weich gelagert aufliegt.

Bei einer vorteilhaften Ausgestaltung weist der Klemmring eine, insbesondere mit Ausnahme des Umfangsstellenbereichs, umlaufende Ringnut zur Aufnahme des Halteblechs auf. Von Vorteil ist dabei, dass eine in axialer Richtung formschlüssige Verbindung mit dem Haltblech bewirkbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist ein Halteblech 2 mit Klemmringen 1 in Schrägansicht gezeigt, welches an der Innenseite eines Getriebes befestigbar ist.
In der Figur 2 ist ein nicht erfindungsgemässer Klemmring 1 mit eingefügter Rohrleitung 20 in Schrägansicht gezeigt.
In der Figur 3 ist das Halteblech 2 mit nicht erfindungsgemässen Klemmringen 1 und eingefügter Rohrleitung 20 sowie Schraubteil 31 zur Aufnahme und Durchleitung der Rohrleitung 20 in Seitenansicht gezeigt.
In der Figur 4 ist ein Querschnitt durch den nicht erfindungsgemässen Klemmring 1 gezeigt.
In der Figur 5 ist der nicht erfindungsgemässe in Schrägansicht gezeigt.
In der Figur 6 ist ein Querschnitt durch einen erfindungsgemässen Klemmring 1 gezeigt.
In der Figur 7 ist der erfindungsgemässe Klemmring in Schrägansicht gezeigt.

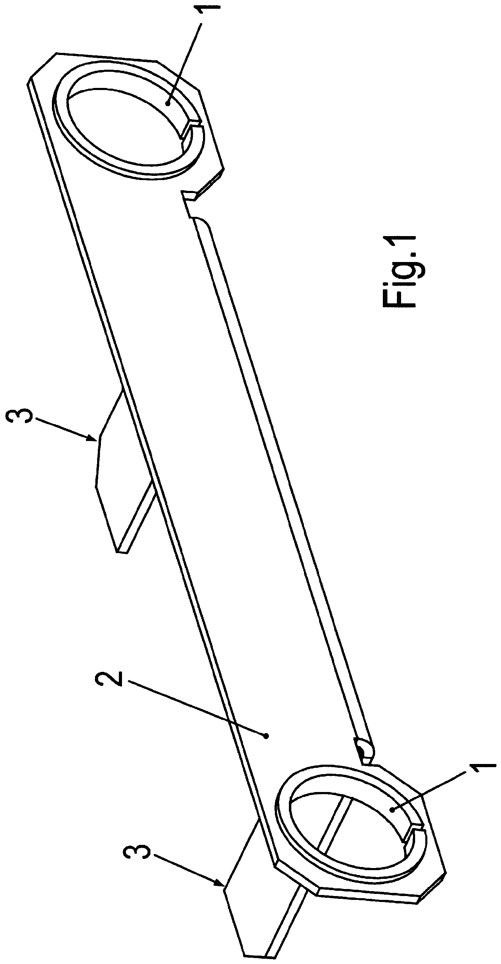

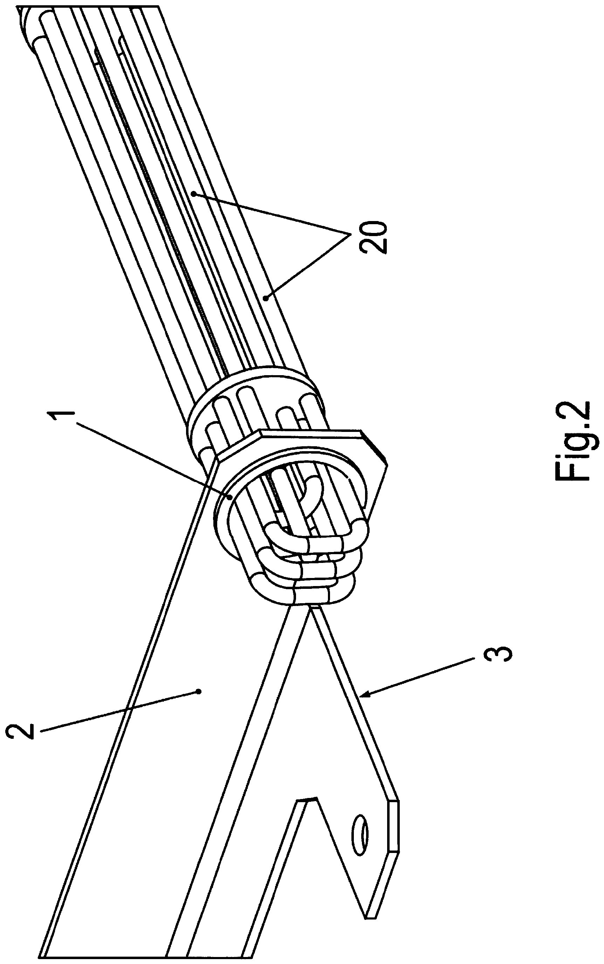

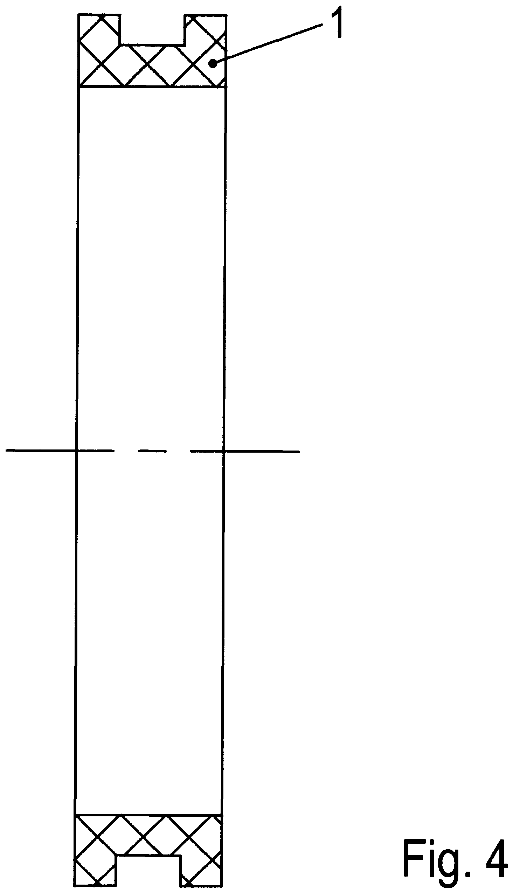

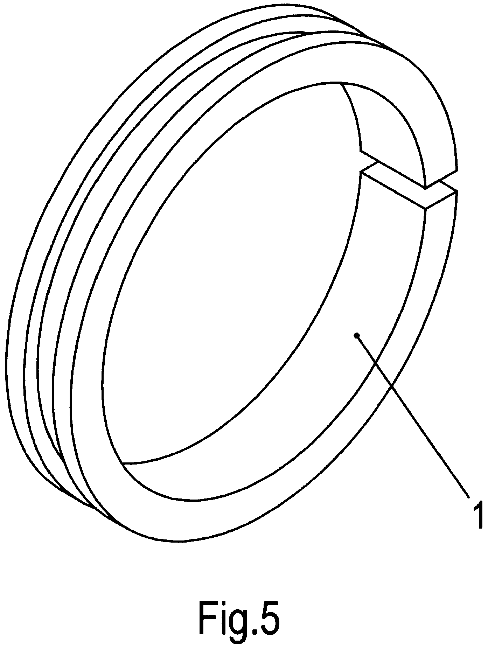

Wie in den Figuren 1 bis 6 gezeigt, ist der Klemmring 1 ringförmig ausgeführt, wobei er an einer Stelle seines Umfangs einen durchgehenden Schlitz, also eine Unterbrechung, aufweist.

Vorzugsweise ist der Klemmring aus einem elastischeren Material als das Halteblech 2. Das Halteblech 2 ist vorzugsweise aus Stahlblech ausgeführt.

Der nicht erfindungsgemässe Klemmring 1 weist an seiner radialen Außenseite eine umlaufende Nut auf, mit welcher er in die Berandung einer kreisförmigen Ausnehmung des Halteblechs 2 einführbar ist, insbesondere einklipsbar, und somit formschlüssig verbindbar ist mit dem Halteblech 2.

Das Halteblech 2 weist zwei voneinander beabstandete Laschen 3 auf, die jeweils vom Grundkörper abgewinkelt vorgesehen ist. Diese abgebogenen Laschen weist vorzugsweise einen Biegewinkel zwischen 45° und 135° zum Grundkörper des Halteblechs 2 auf.

Eine Ausnehmung 30, insbesondere kreisförmiges durchgehendes Loch, ist in der Lasche angeordnet, so dass Schrauben durchführbar durch die Ausnehmung 30 sind. Mittels dieser Schrauben ist somit das Halteblech mit einem Getriebe schraubverbindbar. Auf diese Weise ist das Halteblech 2 an der Innenwandung des Getriebes befestigbar und die Klemmringe 1 mit dem Halteblech 2 verbindbar.

In einer durchgehenden Ausnehmung des Gehäuseteils des Getriebes, insbesondere in einer durchgehenden Gewindebohrung, ist ein Schraubteil 31 eingeschraubt, welches die Rohrleitung 20 aufnimmt. Vorzugsweise weist das schraubteil 31 an seiner aus dem Getriebe in die Umgebung hervorragenden Seite ein Anschlusselement auf, das mit der Rohrleitung 20 verbunden ist und mit einem Schlauch oder einem Rohr verbindbar ist. Somit ist ein Kühlmittel in die Rohrleitung von außen einleitbar. Die Rohrleitung 20 geht also durch das Schraubteil 31 hindurch und ist somit in dem Schraubteil 31 aufgenommen und abgestützt. Die Rohrleitung 20 ragt vom Schraubteil 31 ausgehend sehr weit in den Innenraum des Getriebes hinein.

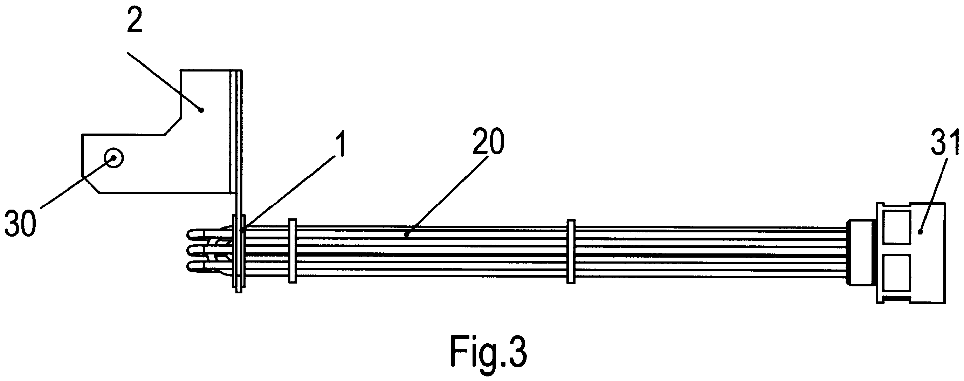

Wie in Figur 3 gezeigt, ist die Rohrleitung 20 nicht nur vom Schraubteil 31 gehalten, sondern auch vom Klemmring 1, der im Halteblech 2 aufgenommen ist, abgestützt.

Auf diese Weise ist eine beidseitige Abstützung der Rohrleitung 21 erreichbar und somit eine erhöhte Standzeit und Dichtigkeit.

Der Klemmring 1 ist aus einem öl-beständigen und/oder verschleißfesten Material hergestellt.

Die Rohrleitung 21 wird im Klemmring 1 nur aufgelegt und somit spielbehaftet im Klemmring 1 aufgenommen.

Wie oben beschrieben, ist der Klemmring 1 als Ring ausgeführt mit einer einzigen am Umfang angeordneten Unterbrechungsstelle. Dabei weist der Klemmring 1 an seiner radialen Außenseite eine mittig angeordnete Nut auf, in welcher der die Ausnehmung des Halteblechs 2 begrenzende Randbereich aufgenommen ist.

Wie in Figur 1 gezeigt, weist das Halteblech 2 nicht nur einen einzigen Klemmring 1 auf, sondern auch einen zweiten Klemmring 1. Somit sind zwei Rohrleitungen 20 abstützbar.

Auf diese Weise sind auch sehr leistungsfähige Kühlvorrichtungen verwendbar. In einer einfachen Ausführung wird aber nur in einem der beiden Klemmringe 1 eine Rohrleitung 20 aufgenommen. Falls die Kühlleistung nicht ausreicht, ist eine weitere Rohrleitung 20 in den weiteren Klemmring 1 einführbar und dort abstützbar. Dabei ist auch ohne die weitere Rohrleitung 20, also bei unbesetztem zweiten Klemmring 2, vorteilhafterweise das Halteblech 2 unverändert anwendbar, da die beiden Bohrungen zur Schraubverbindung des Halteblechs 2, im Getriebegehäuse stets dieselben sind, also das Bohrbild unabhängig von der Anzahl der Rohrleitungen 20 ist. Somit ist auch ein Nachrüsten des Getriebes ermöglicht. Denn in einem ersten Schritt wird nur ein einziger der beiden Klemmringe 1 mit einer Rohrleitung 20 beaufschlagt und somit diese Rohrleitung 20 abgestützt. Beim Nachrüsten des Getriebes ist dann eine weitere Rohrleitung ins Getriebe einbringbar, die am zweiten Klemmring 1 abstützbar ist.

Der Klemmring 1 bildet nicht nur eine Abstützung, sondern auch eine Begrenzung des Spielraums für die Rohrleitung 20, insbesondere in radialer Richtung.

Die Rohrleitung ist vorzugsweise durch das Schraubteil 31 durchgehend ausgeführt, wobei das Schraubteil 31 selbst wiederum in eine durchgehende Gewindebohrung eingeschraubt ist, wobei die durchgehende Gewindebohrung in der Gehäusewand eines Gehäuseteils des Getriebes angeordnet ist.

Der Klemmring 1 ist nicht im Bereich einer der abgebogenen Laschen 3 angeordnet, sondern im Grundkörper des Halteblechs 2, also im nicht gebogenen Bereich. Dabei sind die Laschen 3 beabstandet von dem Bereich der Aufnahme des Klemmrings 1.

Wie in Figur 1 gezeigt, sind die beiden im Grundkörper des Halteblechs 2 aufgenommenen Klemmringe 1 parallel zueinander angeordnet. Insbesondere überdecken sie beide jeweils denselben axialen Bereich.

Der jeweilige Klemmring 1 ist im Halteblech 2 eingeklipst gehalten. Jeder Klemmring 2 ist also elastisch derart verformt, dass die elastisch erzeugte Federkraft an seinem gesamten Umfang nach radial außen drückt, so dass die an der Außenseite des Klemmrings 1 angeordnete Ringnut auf den Aufnahmebereich des Halteblechs 2 in gedrückt wird.

In Weiterbildung ist der Klemmring 1 dann einsparbar, wenn keine Rohrleitung 20 auf ihm abgestützt werden soll. Somit weist das Halteblech 2 dann in diesem Fall eine zweite Ausnehmung auf, die zwar zur Aufnahme eines Klemmrings 1 geeignet ist, aber keinen Klemmring 1 aufnimmt, solange nicht eine Nachrüstung erfolgt.

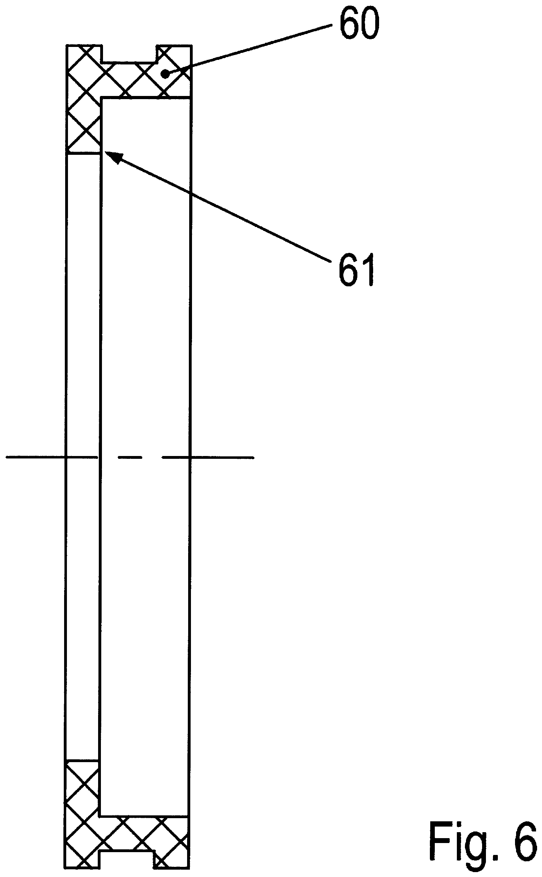

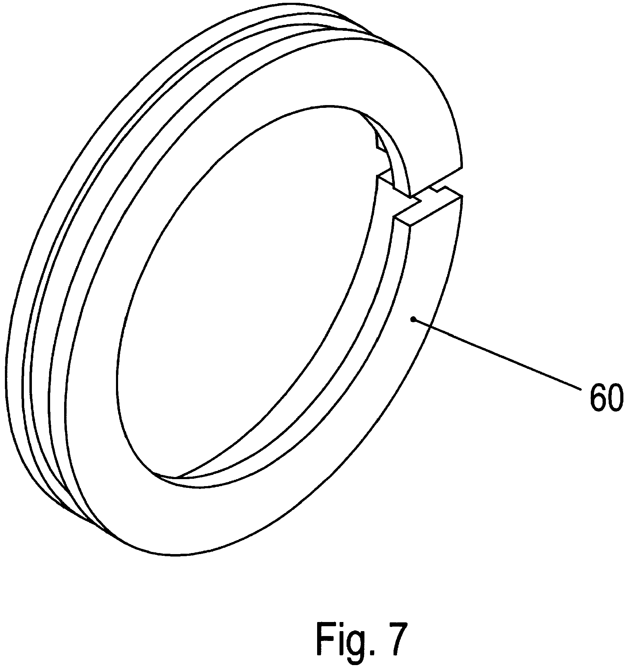

Wie in Figur 6 und 7 gezeigt, ist bei einem erfindungsgemäßen Ausführungsbeispiel statt des Klemmrings 1 ein Klemmring 60 mit Innenlippe dargestellt. Dabei erstreckt sich die in Umfangsrichtung umlaufende Innenlippe 61 nach radial innen. Somit ist die Innenlippe 61 derjenige Bereich des Klemmrings 1, welcher den kleinsten Radialabstand des Klemmrings 1 aufweist.

Die Dichtlippe, also Innenlippe 61, ist axial weniger ausgedehnt als der Klemmring 60 insgesamt. Somit ist die Dichtlippe durch Auflegen der Rohrleitung 20 umwölbbar und lagert somit die Rohrleitung 20 besonders elastisch.

Bei einem weiteren erfindungsgemäßen Ausführungsbeispiel ist die in der Rohrleitung 20 geförderte Flüssigkeit keine Kühlflüssigkeit, sondern wird erhitzt, so dass ein Erwärmen des Schmiermittels des Getriebes erreichbar ist. Somit ist das Schraubteil 31 zusammen mit der Rohrleitung 20 dann als Heizpatrone wirksam.

Bei einem weiteren erfindungsgemäßen Ausführungsbeispiel ist das Halteblech 2 kein Stanz-Biegeteil aus Stahlblech, sondern wird aus einem Stahlblech mittels Laser geschnitten und danach gebogen.

### Bezugszeichenliste

- 1: Klemmring
- 2: Halteblech
- 3: Lasche
- 20: Rohrleitung
- 30: Ausnehmung
- 31: Schraubteil
- 60: Klemmring mit Innenlippe 61
- 61: Innenlippe

## Patentansprüche

1. Getriebe mit einer Rohrleitung (20),
**wobei** im Innenraum des Getriebes ein Halteblech (2) schraubverbunden ist, das eine oder mehr Ausnehmungen (30) aufweist, in welchen jeweils ein Klemmring (1,60) aufnehmbar ist,
wobei die Rohrleitung (20) in einem mit einem Gehäuseteil des Getriebes schraubverbundenen Schraubteil (31) gehalten ist,
**dadurch gekennzeichnet, dass**
die Rohrleitung (20) durch einen in der Ausnehmung (30) oder in einer der Ausnehmungen (30) angeordneten Klemmring (60) hindurchgeführt ist und/oder abgestützt ist,
**wobei der Klemmring** (60) **aus einem Kunststoff ausgeführt ist,**
**wobei der Klemmring** (60) **eine nach radial innen hervorragende Dichtlippe** (61) **aufweist.**

2. Getriebe nach Anspruch 1,
**dadurch gekennzeichnet, dass**
der Klemmring (60) aus einem elastischeren Material ausgeführt ist als das Halteblech (2),

3. Getriebe nach mindestens einem der vorangegangenen Ansprüche,
**dadurch gekennzeichnet, dass**
**der Kunststoff ein Polyamid ist.**

4. Getriebe nach mindestens einem der vorangegangenen Ansprüche,
**dadurch gekennzeichnet, dass**
in der Rohrleitung (20) eine Flüssigkeit angeordnet ist, wobei also die Flüssigkeit eine höhere oder niedrigere Temperatur als das die Rohrleitung (20) umgebende Schmieröl des Getriebes aufweist.

5. Getriebe nach mindestens einem der vorangegangenen Ansprüche,
**dadurch gekennzeichnet, dass**
die Rohrleitung (20) auf den Klemmring (60) aufgelegt ist.

6. Getriebe nach mindestens einem der vorangegangenen Ansprüche,
**dadurch gekennzeichnet, dass**
die Rohrleitung (20) spielbehaftet im Klemmring (60) angeordnet und/oder durchgeführt ist.

7. Getriebe nach mindestens einem der vorangegangenen Ansprüche,
**dadurch gekennzeichnet, dass**
das Halteblech (2) eine oder mehrere Laschen (3), aufweist.

8. Getriebe nach mindestens einem der vorangegangenen Ansprüche,
**dadurch gekennzeichnet, dass**
die jeweilige Lasche (3) jeweils eine Ausnehmung (30) aufweist,
durch die jeweils ein Schraubelement hindurchführbar ist und mit welchem das Halteblech (2) an die Innenseite eines Gehäuseteils des Getriebes angeschraubt ist,

9. Getriebe nach mindestens einem der vorangegangenen Ansprüche,
**dadurch gekennzeichnet, dass**
der Klemmring (60) als Rotationskörper ausgeführt ist mit Ausnahme eines Umfangsstellenbereiches eines zusammenhängenden Umfangswinkelbereichs.

10. Getriebe nach mindestens einem der vorangegangenen Ansprüche,
**dadurch gekennzeichnet, dass**
der Klemmring (60) eine, umlaufende Ringnut zur Aufnahme des Halteblechs (2) aufweist.

11. Getriebe nach mindestens einem der vorangegangenen Ansprüche,
**dadurch gekennzeichnet, dass**
der von der Dichtlippe überdeckte axiale Bereich echt umfasst ist von dem vom Klemmring (60) überdeckten axialen Bereich.

12. Getriebe nach mindestens einem der vorangegangenen Ansprüche,
**dadurch gekennzeichnet, dass**
der jeweilige Klemmring (60) im Halteblech (2) eingeklipst gehalten ist
und/oder dass
der jeweilige Klemmring (60) derart elastisch verformt ist, dass somit elastisch erzeugte Federkraft am gesamten Umfang des Klemmrings (60) nach radial außen drückt,

## Claims

1. Gearing comprising a pipeline (20),
a retaining sheet (2) being screwed in the interior of the gearing and having one or more recesses (30), in each of which a clamping ring (1, 60) can be received,
the pipeline (20) being held in a screw part (31) screwed to a housing part of the gearing,
**characterised in that**
the pipeline (20) is guided through and/or supported by a clamping ring (60) arranged in the recess (30) or in one of the recesses (30),
the clamping ring (60) being made of a plastics material,
the clamping ring (60) having a sealing lip (61) protruding radially inwards.

2. Gearing according to claim 1,
**characterised in that**
the clamping ring (60) is made of a more resilient material than the retaining sheet (2).

3. Gearing according to at least one of the preceding claims,
**characterised in that**
the plastics material is a polyamide.

4. Gearing according to at least one of the preceding claims,
**characterised in that**
a liquid is arranged in the pipeline (20), the liquid thus being at a higher or lower temperature than the gearing lubrication oil surrounding the pipeline (20).

5. Gearing according to at least one of the preceding claims,
**characterised in that**
the pipeline (20) is positioned on the clamping ring (60).

6. Gearing according to at least one of the preceding claims,
**characterised in that**
the pipeline (20) is arranged in and/or guided through the clamping ring (60) with play.

7. Gearing according to at least one of the preceding claims,
**characterised in that**
the retaining sheet (2) has one or more lugs (3).

8. Gearing according to at least one of the preceding claims,
**characterised in that**
each lug (3) has a recess (30), through which a screw element can be guided in each case and by which the retaining sheet (2) is screwed to the inside of a housing part of the gearing.

9. Gearing according to at least one of the preceding claims,
**characterised in that**
the clamping ring (60) is configured as a rotary member, apart from one circumferential region of a contiguous circumferential angular range.

10. Gearing according to at least one of the preceding claims,
**characterised in that**
the clamping ring (60) has a circumferential annular groove for receiving the retaining sheet (2).

11. Gearing according to at least one of the preceding claims,
**characterised in that**
the axial region covered by the sealing lip is entirely encompassed by the axial region covered by the clamping ring (60).

12. Gearing according to at least one of the preceding claims,
**characterised in that**
each clamping ring (60) is held in the retaining sheet (2) in a clipped-in manner and/or **in that**
each clamping ring (60) is resiliently deformed such that resiliently generated spring force thus pushes radially outwards over the entire circumference of the clamping ring (60)

## Revendications

1. Transmission comportant une canalisation (20),
une tôle de retenue (2) qui présente un ou plusieurs évidements (30), dans chacun desquels une bague de serrage (1, 60) peut être logée, étant vissée à l'intérieur de la transmission,
la canalisation (20) étant maintenue dans une partie filetée (31) vissée avec une partie carter de la transmission,
**caractérisée en ce que**
la canalisation (20) est passée à travers et/ou supportée par une bague de serrage (60) disposée dans l'évidement (30) ou dans l'un des évidements (30),
la bague de serrage (60) étant réalisée dans une matière plastique,
la bague de serrage (60) présentant une lèvre d'étanchéité (61) faisant saillie radialement vers l'intérieur.

2. Transmission selon la revendication 1,
**caractérisée en ce que**
la bague de serrage (60) est réalisée dans un matériau plus élastique que la tôle de retenue (2).

3. Transmission selon au moins l'une des revendications précédentes,
**caractérisée en ce que**
la matière plastique est un polyamide.

4. Transmission selon au moins l'une des revendications précédentes,
**caractérisée en ce**
**qu'**un liquide est disposé dans la canalisation (20),
le fluide présentant une température supérieure ou inférieure à celle de l'huile lubrifiante de la transmission entourant la canalisation (20).

5. Transmission selon au moins l'une des revendications précédentes,
**caractérisée en ce que**
la canalisation (20) est posée sur la bague de serrage (60).

6. Transmission selon au moins l'une des revendications précédentes,
**caractérisée en ce que**
la canalisation (20) est disposée dans la bague de serrage (60) et/ou passée à travers celle-ci avec du jeu.

7. Transmission selon au moins l'une des revendications précédentes,
**caractérisée en ce que**
la tôle de retenue (2) présente une ou plusieurs pattes (3).

8. Transmission selon au moins l'une des revendications précédentes,
**caractérisée en ce que**
la patte respective (3) présente à chaque fois un évidement (30),
à travers lequel un élément fileté peut être passé et avec lequel la tôle de retenue (2) est vissée sur le côté intérieur d'une partie carter de la transmission.

9. Transmission selon au moins l'une des revendications précédentes,
**caractérisée en ce que**
la bague de serrage (60) est réalisée sous la forme d'un corps de révolution, à l'exception d'une zone d'emplacement circonférentiel d'une zone angulaire circonférentielle continue.

10. Transmission selon au moins l'une des revendications précédentes,
**caractérisée en ce que**
la bague de serrage (60) présente une rainure annulaire circonférentielle pour recevoir la tôle de retenue (2).

11. Transmission selon au moins l'une des revendications précédentes,
**caractérisée en ce que**
la zone axiale recouverte par la lèvre d'étanchéité est véritablement entourée par la zone axiale recouverte par la bague de serrage (60).

12. Transmission selon au moins l'une des revendications précédentes,
**caractérisée en ce que**
la bague de serrage respective (60) est maintenue par clipsage dans la tôle de retenue (2)
et/ou que
la bague de serrage respective (60) est déformée élastiquement de telle sorte que la force de ressort ainsi produite exerce une pression radialement vers l'extérieur sur toute la circonférence de la bague de serrage (60).
